(19) Europäisches Patentamt
European Patent Office
Office européen des brevets

(11) **EP 0 805 990 B1**

(12) **EUROPÄISCHE PATENTSCHRIFT**

(45) Veröffentlichungstag und Bekanntmachung des Hinweises auf die Patenterteilung:
**23.01.2002   Patentblatt 2002/04**

(51) Int Cl.⁷: **G01S 13/48**, G01S 3/14

(21) Anmeldenummer: **96943868.8**

(22) Anmeldetag: **11.10.1996**

(86) Internationale Anmeldenummer:
**PCT/DE96/01945**

(87) Internationale Veröffentlichungsnummer:
**WO 97/20229 (05.06.1997 Gazette 1997/24)**

(54) **RADARSYSTEM, INSBESONDERE KRAFTFAHRZEUG-RADARSYSTEM**

RADAR SYSTEM, IN PARTICULAR MOTOR VEHICLE RADAR SYSTEM

SYSTEME RADAR, NOTAMMENT POUR VEHICULES A MOTEUR

(84) Benannte Vertragsstaaten:
**DE FR GB**

(30) Priorität: **24.11.1995   DE 19543813**

(43) Veröffentlichungstag der Anmeldung:
**12.11.1997   Patentblatt 1997/46**

(73) Patentinhaber: **ROBERT BOSCH GMBH**
**70442 Stuttgart (DE)**

(72) Erfinder:
• **WAGNER, Klaus-Peter**
  **D-70193 Stuttgart (DE)**
• **WINTER, Klaus**
  **D-71701 Schwieberdingen (DE)**
• **PFIZENMAIER, Heinz**
  **D-71229 Leonberg (DE)**

(56) Entgegenhaltungen:
**EP-A- 0 684 486**     DE-A- 3 740 142
**GB-A- 2 253 758**     US-A- 4 320 400

**Beschreibung**

Stand der Technik

Die vorliegende Erfindung behandelt ein Verfahren zur Bestimmung eines Seiten- und/oder eines Höhenwinkels, in dem sich ein Radarziel relativ zu einem Bezugssystem befindet sowie ein darauf basierendes Radarsystem. Als Bezugssystem dient dabei vorzugsweise das Radarsystem selbst. Bekannte Verfahren zur Winkelbestimmung sind beispielsweise im "Radar Handbook" vom M. Skolnik beschrieben.

Eine weit verbreitete Möglichkeit ist demnach die Verwendung einer Antenne mit einer in der Ebene des gesuchten Winkels scharf gebündelten Antennenkeule, die zur Beobachtung bzw. Vermessung eines Winkelbereichs mechanisch geschwenkt wird. Aus der Position der Antenne zu dem Moment, zu dem die Reflexion eines Radarziels empfangen wird, läßt sich der Winkel des Radarziels bestimmen. Nachteilig bei diesem Verfahren ist die mechanische Drehung der Antenne, die einerseits einen mechanischen Verschleiß mit sich bringt und andererseits aufgrund der Trägheit der bewegten Massen vergleichsweise viel Zeit erfordert. Zur Vermeidung dieser Nachteile kann eine Phased-Array-Antenne eingesetzt werden, bei der die zugehörige Antennenkeule elektronisch geschwenkt wird. Diese benötigt jedoch zur Erzielung einer scharfen Bündelung eine Vielzahl von aktiven, phasengesteuerten Sende-/Empfangselementen, was wiederum einen vergleichsweise hohen Realisierungsaufwand erfordert. Beiden Verfahren ist darüber hinaus gemeinsam, daß der beobachtete Winkelbereich gescannt, also sequentiell abgetastet wird. Dies kann in Abhängigkeit der Scangeschwindigkeit die Genauigkeit der Winkelmessung verschlechtern.

Ein anderes ebenfalls von Skolnik beschriebenes Prinzip zur Winkelbestimmung ist das sog. Monopuls-Verfahren. Dabei wird eine Antenne verwendet, die in der Ebene des gesuchten Winkels mindestens zwei, sich nur teilweise überlappende Antennenkeulen besitzt. Die Reflexionen eines detektierten Radarziels werden nun über jede der zumindest zwei Antennenkeulen empfangen. Zur Bestimmung des Winkels wird beim sog. Phasenmonopuls die Phasendifferenz der empfangenen Reflexionen aus allen Antennenkeulen ausgewertet. Beim sog. Amplitudenmonopuls wird ein Differenz- und ein Summensignal aus den über die einzelnen Antennenkeulen empfangenen Reflexionen gebildet. Der Quotient aus den beiden hängt annähernd linear vom Winkel des detektierten Radarziels ab. Nachteilig bei beiden Varianten des Monopuls-Verfahrens ist jedoch, daß der bestimmte Winkel eines Radarziels nur innerhalb bestehender Grenzen eindeutig ist. Reflexionen von Radarzielen, die außerhalb des eindeutigen Winkelbereichs liegen, werden bei diesem Verfahren fehlinterpretiert. Darüber hinaus erfordert insbesondere das Amplitudenmonopuls-Verfahren annähernd gleiche, symmetrisch zueinander liegende Antennenkeulen. Dies wiederum bedeutet einen vergleichsweise hohen Aufwand bei der Herstellung und bei der Wartung der Antenne.

In der US 4,320,400 wird ein Verfahren und eine Vorrichtung offenbart, das/die in der Lage ist, aus einer grossen Anzahl empfangener Radarsignale die Frequenz und den Winkel der empfangenen Radarsignale zu bestimmen. Dazu werden die Signale der einzelnen Empfangszweige in einem Signalprozessor nach Amplitude und Form normiert und nach einem Vergleich mit dem entsprechenden Signal eines benachbarten Empfangszweiges eine Phasendifferenz in Form von Amplitudenänderungen als Ausgangssignal zur Verfügung gestellt. Diese Phasendifferenz wird in einem weiteren Signalprozessor in einen entsprechenden Winkel des ankommenden Signals umgerechnet. Es wird außerdem die Möglichkeit genannt, eine bereits bekannte Antennencharakteristik in die Bestimmung des Winkels der ankommenden Signale mit einzubeziehen.

Aufgabe, Lösung und Vorteile der Erfindung

Ziel der vorliegenden Erfindung ist es dementsprechend, ein Verfahren und ein darauf basierendes Radarsystem vorzuschlagen, das eine eindeutige und kostengünstig zu realisierende Möglichkeit zur Bestimmung eines Winkels eines Radarziels bietet. Erfindungsgemäß wird die Aufgabe mit einem mehrstrahligen, insbesondere einem dreistrahligen Radarsystem gelöst, dessen gesamtes, nachfolgend-definiertes Zweiwege-Antennendiagramm in Form von normierten Werten, die sowohl Leistungs-, Spannungs-, Feldstärke-, Pegelangaben oder Ähnlichem entsprechen können, gespeichert ist. Mehrstrahlig bedeutet dabei, daß das Radarsystem ein reflektiertes Radarsignal über mehrere, d.h. zumindest zwei Antennenkeulen und damit jeweils verbundene Empfangskanäle aufnimmt. Der Winkel eines detektierten Radarziels kann durch Vergleich der Amplituden der in den zumindest zwei Kanälen empfangenen Reflexionssignale mit den gespeicherten Werten des Zweiwege-Antennendiagramms bestimmt werden. Die Bezeichnung Zweiwege-Antennendiagramm beinhaltet, daß hier im Unterschied zu einem üblichen Antennendiagramm der Hin- und der Rückweg eines Radarsignals, d.h. also die Sende- und die Empfangscharakteristik der Antenne gleichzeitig Eingang finden.

Bei dem erfindungsgemäßen Verfahren entfällt die Notwendigkeit von exakt symmetrischen Antennenkeulen. Außerdem ist der für ein detektiertes Radarziel bestimmte Winkel über den gesamten Meßbereich eindeutig. Als weitere Vorteile liefert das erfindungsgemäße Verfahren ein aussagekräftiges Gütekriterium bezüglich einer getroffenen Winkelentscheidung und ist insbesondere geeignet für eine parallele Verarbeitung der Reflexionen aus den einzelnen Antennenkeulen. Nicht zuletzt wird der Aufwand für die Winkelbestimmung von der Hardware in die Software des Radarsystems verlagert, was angesichts der modernen Prozessoren- und Speichertechnologie zunehmend billiger wird.

Beschreibung zweier Ausführungsbeispiele

Nachfolgend werden zwei Ausführungsbeispiele der Erfindung anhand einer Zeichnung erläutert. Es zeigen

Figur 1 ein Blockschaltbild eines dreistrahligen Radarsystems zur Durchführung des erfindungsgemäßen Verfahrens,

Figur 2 ein Zweiwege-Antennendiagramm eines dreistrahligen Radarsystems über einem den jeweiligen Meßwinkel alpha kennzeichnenden Winkelindex a,

Figur 3 ein normiertes Zweiwege-Antennendiagramm des dreistrahligen Radarsystems über demselben Winkelindex a,

Figur 4 beispielhaft für eine Keule des Zweiwege-Antennendiagramms die der Größe nach sortierten, normierten Diagrammwerte über einem winkelunabhängigen Sortierindex n,

Figur 5 eine grafische Darstellung der Zuordnung der Winkelindizes a zu den Sortierindizes n aus Fig. 4,

Figur 6a bis d eine schematische Darstellung eines Bewertungsvorganges zur Bestimmung des wahrscheinlichsten Winkels eines Radarziels,

Figur 7 ein Flußdiagramm zur Erläuterung eines ersten Ausführungsbeispiels,

Figur 8 den Betragsverlauf einer Differenzfunktion zwischen einer normierten Amplitude eines Empfangssignals und den normierten Diagrammwerten einer Keule des Zweiwege-Antennendiagramms,

Figur 9 den Betragsverlauf der Summe aller Differenzfunktionen aus den einzelnen Antennenkeulen und

Figur 10 ein Flußdiagramm zur Erläuterung eines zweiten Ausführungsbeispiels der Erfindung.

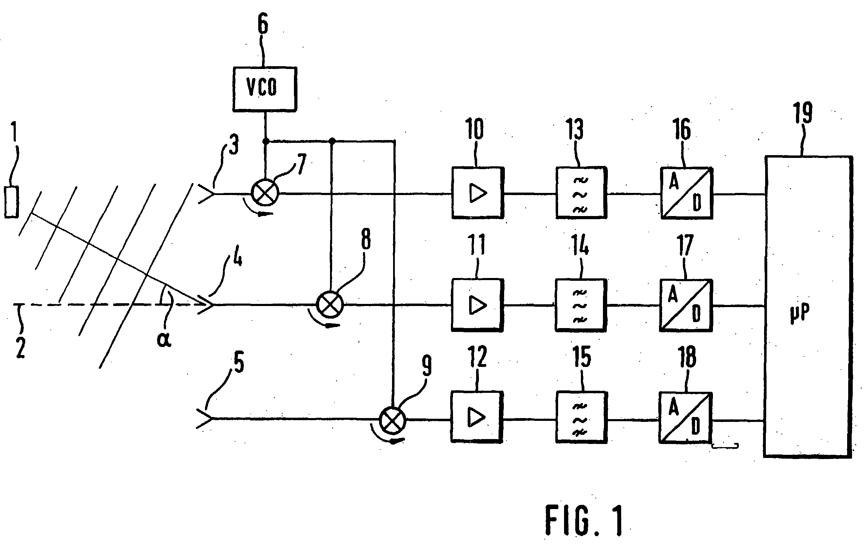

In Figur 1 sind drei Sende-/Empfangselemente 3,4,5 mit drei sog. Dual-Ratrace-Ringen 7,8,9 verbunden. Die Dual-Ratrace-Ringe vereinigen die Funktion eines Mischers mit der einer Sende-/Empfangsweiche bzw. eines Zirkulators und sind in ihrer Funktionsweise und ihrem Aufbau beispielsweise in der Patentanmeldung GB 22 90 000 ausführlich beschrieben. Außerdem erhält jeder der Dual-Ratrace-Ringe 7,8,9 das Ausgangssignal eines spannungsgesteuerten Oszillators 6. Das Ausgangssignal jedes der drei Dual-Ratrace-Ringe 7,8,9 wird über Verstärker 10,11,12 und Filter 13,14,15 zu jeweils einem Analog-/Digital-Wandler 16,17,18 geführt. Diese sind an ihrem Ausgang mit einem Auswerterechner 19 verbunden. Mit 1 ist ein detektiertes Radarziel bezeichnet, von dem aus eine Wellenfront unter einem Winkel alpha zur optischen Achse 2 des Radarsystems zu den Sende-/Empfangselementen 3,4,5 reflektiert wird.

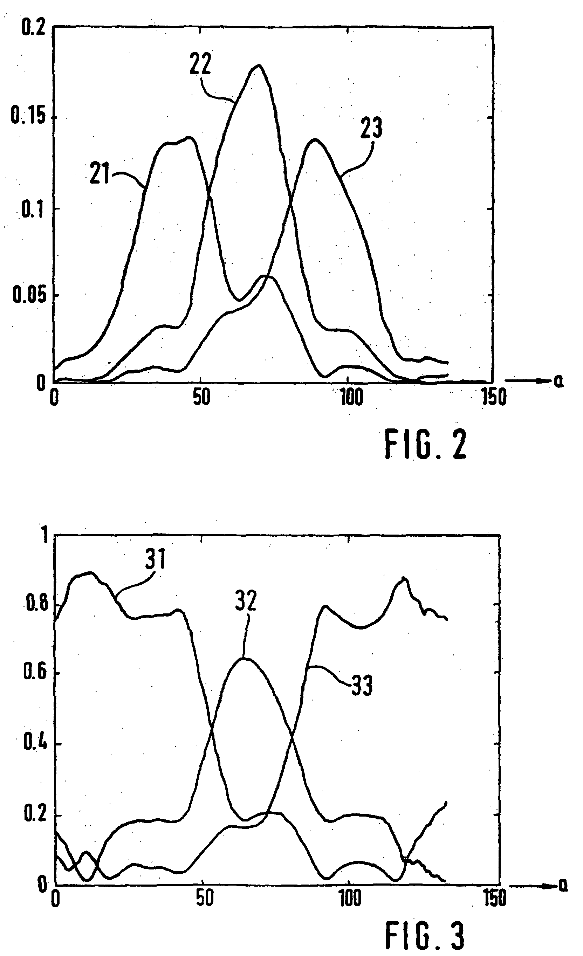

In Figur 2 ist ein Zweiwege-Antennendiagramm eines dreistrahligen Radarsystems dargestellt. Dabei ist der Betragswert beispielsweise der Spannung, der Leistung oder der Feldstärke über einem den Einfallswinkel repräsentierenden Winkelindex a aufgetragen. Die mit 21 bezeichnete Kurve stellt den am linken Empfangselement 5 aufgenommenen Betragswert dar. Die mit 22 bezeichnete Kurve stellt den mittleren Empfangselement 4 aufgenommenen Betragswert dar. Die mit 23 bezeichnete Kurve stellt den am rechten Empfangselement 3 aufgenommenen Betragswert dar. Zur exakten Bezeichnung werden diese Betragswerte nachfolgend als Diagrammwerte bezeichnet.
In Figur 3 ist das Zweiwege-Antennendiagramm von Figur 2 in einer normierten Darstellung gezeigt. Die Normierung kann dabei auf unterschiedliche Weise erfolgen. Kurve 31 zeigt die normierten Diagrammwerte für die linke Antennenkeule, d.h. für das linke Sende-/Empfangselement 5. Kurve 32 und 33 zeigen die normierten Diagrammwerte der mittleren und der rechten Antennenkeule, d.h. für die Sende-/Empfangselemente 4 und 3. Die Normierung erfolgt vorzugsweise mit einer Summennorm. Dabei wird jeder Diagrammwert der Kurven 21,22,23 durch einen Normierungswert sum(a) geteilt, der sich wie folgt ergibt:

$$sum(a) = l(a)+m(a)+r(a)$$

wobei bedeuten

l(a) Diagrammwert der linken Kurve beim Winkelindex a
m(a) Diagrammwert der mittleren Kurve beim Winkelindex a
r(a) Diagrammwert der rechten Kurve beim Winkelindex a

Die Diagrammwerte der drei normierten Kurve 31,32,33 ergeben sich also zu

nl(a)=l(a)/sum(a)
nm(a)=m(a)/sum(a)
nr(a)=r(a)/sum(a)

wobei bedeuten

nl(a)     Diagrammwert der linken normierten Kurve beim Winkelindex a
nm(a)     Diagrammwert der mittleren normierten Kurve beim Winkelindex a
nr(a)     Diagrammwert der rechten normierten Kurve beim Winkelindex a

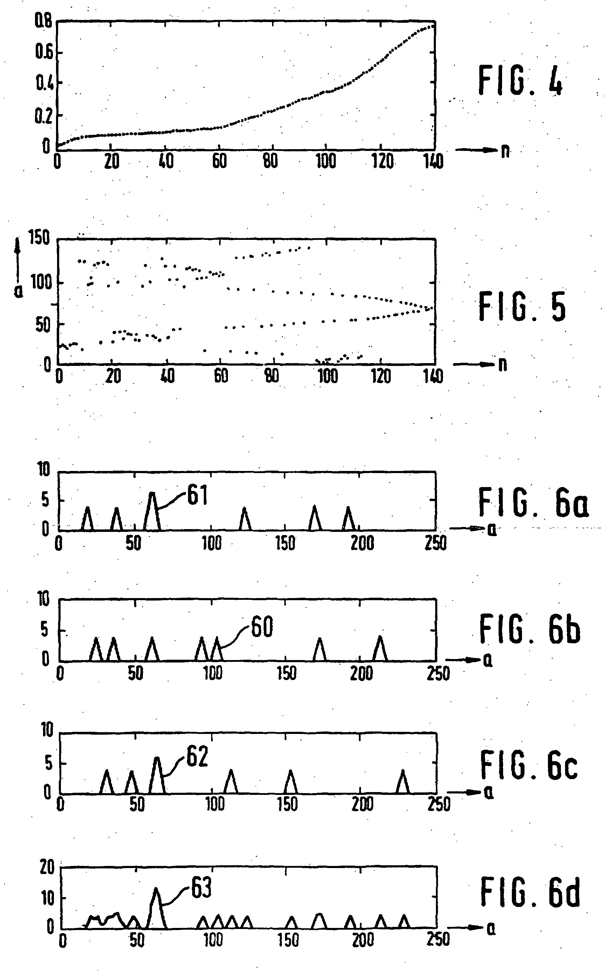

Die Summe der Diagrammwerte aller Kurven 31-33 ergibt für jeden Winkelindex a bei dieser Normierung Eins bzw. verallgemeinert einen konstanten Wert. Alternativ kann eine Normierung beispielsweise auch mit einer Produktnorm erfolgen, bei der das Produkt der Diagrammwerte aller normierten Kurven gleich einem konstanten Wert sein muß.
Die nachfolgenden Figuren 4 bis 7 beziehen sich auf ein erstes Ausführungsbeispiel der Erfindung, das nun ausführlich erläutert wird. Bei einem Radarsystem gemäß Figur 1 wird durch einen Oszillator 6 ein Sendesignal erzeugt, das über die Sende-/Empfangselemente 3,4,5 abgestrahlt wird. Ein Radarziel 1, das von dem Sendesignal beleuchtet wird, erzeugt ein Reflexionssignal, das über die Empfangselemente 3,4,5 vom Radarsystem aufgenommen wird. Je nach der Winkellage des Radarziels und nach der Ausprägung der Antennenkeulen werden dabei in den einzelnen drei Sende-/Empfangselementen 3,4,5 unterschiedliche Amplitudenwerte erzeugt. Die empfangenen Amplitudenwerte werden über die Mischerfunktion der Dual-Ratrace-Ringe 7,8,9 in eine niedrigere Frequenzlage gemischt und anschließend den Verstärkern 10,11,12 zugeführt. Nach einer Dynamik- und Anti-Aliasingfilterung 13,14,15 und einer D/A-Wandlung 16,17,18 gelangen sie als digitale Werte zum Auswerterechner 19.

Tabelle 1

| Links | | Mitte | | Rechts | |
|---|---|---|---|---|---|
| **Amplitude** | **Winkelindex** | **Amplitude** | **Winkelindex** | **Amplitude** | **Winkelindex** |
| 0.7574 | 97.0000 | 0.3698 | 82.0000 | 0.7689 | 35.0000 |
| 0.7594 | 133.0000 | 0.3736 | 51.0000 | 0.7689 | 1.0000 |
| 0.7606 | 111.0000 | 0.3988 | 81.0000 | 0.7694 | 44.0000 |
| 0.7649 | 132.0000 | 0.4065 | 52.0000 | 0.7699 | 36.0000 |
| 0.7656 | 134.0000 | 0.4246 | 80.0000 | 0.7747 | 39.0000 |
| 0.7659 | 96.0000 | 0.4373 | 53.0000 | 0.7769 | 24.0000 |
| 0.7681 | 112.0000 | 0.4480 | 79.0000 | 0.7813 | 40.0000 |
| 0.7755 | 90.0000 | 0.4682 | 54.0000 | 0.7839 | 23.0000 |
| 0.7764 | 131.0000 | 0.4712 | 78.0000 | 0.7846 | 43.0000 |
| 0.7764 | 95.0000 | 0.4958 | 55.0000 | 0.7885 | 41.0000 |
| 0.7787 | 113.0000 | 0.4959 | 77.0000 | 0.7893 | 42.0000 |
| 0.7810 | 127.0000 | 0.5190 | 76.0000 | 0.7949 | 2.0000 |
| 0.7853 | 130.0000 | 0.5253 | 56.0000 | 0.7963 | 22.0000 |
| 0.7868 | 129.0000 | 0.5389 | 75.0000 | 0.8029 | 3.0000 |
| 0.7877 | 94.0000 | 0.5526 | 57.0000 | 0.8088 | 21.0000 |
| 0.7931 | 128.0000 | 0.5560 | 74.0000 | 0.8213 | 20.0000 |
| 0.7932 | 114.0000 | 0.5733 | 73.0000 | 0.8301 | 4.0000 |
| 0.7934 | 91.0000 | 0.5772 | 58.0000 | 0.8351 | 19.0000 |
| 0.7967 | 93.0000 | 0.5898 | 72.0000 | 0.8498 | 16.0000 |

Tabelle 1  (fortgesetzt)

| Links | | Mitte | | Rechts | |
|---|---|---|---|---|---|
| **Amplitude** | **Winkelindex** | **Amplitude** | **Winkelindex** | **Amplitude** | **Winkelindex** |
| 0.8013 | 92.0000 | 0.5986 | 59.0000 | 0.8594 | 5.0000 |
| 0.8048 | 126.0000 | 0.6048 | 71.0000 | 0.8618 | 16.0000 |
| 0.8076 | 125.0000 | 0.6145 | 60.0000 | 0.8621 | 17.0000 |
| 0.8124 | 115.0000 | 0.6169 | 70.0000 | 0.8710 | 15.0000 |
| 0.8125 | 124.0000 | 0.6262 | 69.0000 | 0.8755 | 6.0000 |
| 0.8270 | 123.0000 | 0.6301 | 61.0000 | 0.8813 | 14.0000 |
| 0.8339 | 116.0000 | 0.6340 | 68.0000 | 0.8817 | 7.0000 |
| 0.8460 | 122.0000 | 0.6411 | 62.0000 | 0.8868 | 9.0000 |
| 0.8570 | 117.0000 | 0.6421 | 67.0000 | 0.8872 | 8.0000 |
| 0.8652 | 121.0000 | 0.6469 | 66.0000 | 0.8898 | 13.0000 |
| 0.8702 | 119.0000 | 0.6477 | 63.0000 | 0.8917 | 10.0000 |
| 0.8703 | 118.0000 | 0.6499 | 65.0000 | 0.8927 | 12.0000 |
| 0.8817 | 120.0000 | 0.6513 | 64.0000 | 0.8980 | 11.0000 |

Gemäß dem ersten Ausführungsbeispiel der Erfindung sind die normierten Diagrammwerte des Zweiwege-Antennendiagramms getrennt nach den einzelnen Antennenkeulen in Form von sortierten Listen gespeichert. Tabelle 1 zeigt einen Auszug aus einer solchen Liste, wobei neben den normierten, sortierten Diagrammwerten einer Keule der jeweils zugehörige Winkelindex a aufgeführt ist. Durch die Umsortierung nach der Große der Diagrammwerte erscheinen die Winkelindizes in einer ungeordneten Reihenfolge. Figur 4 zeigt eine grafische Darstellung der nach ihrer Größe sortierten Diagrammwerte einer Antennenkeule über einem fortlaufenden Sortierindex n. In Figur 5 sind die zu Figur 4 gehörenden Winkelindizes über demselben Sortierindex n aufgetragen, wodurch entlang der Abszisse die ungeordnete Reihenfolge der Winkelindizes gemäß Tabelle 1 sichtbar wird.

Der Auswerterechner 19 führt nun gemäß Block 73 zunächst eine Normierung der empfangenen Amplitudenwerte des Radarziels durch, wobei die Normierung derjenigen entspricht, die für das Zweiwege-Antennendiagramm gewählt wurde. Dann sucht er gemäß 74 für jeden Empfangspfad, d.h. für jede Antennenkeule innerhalb der zugehörigen sortierten Liste denjenigen normierten Diagrammwert, der dem in dieser Keule empfangenen, normierten Amplitudenwert am nächsten kommt.

Tabelle 2 zeigt dies beispielhaft für einen empfangenen, normierten Amplitudenwert von 0,6. Gemäß 75 werden nun eine Anzahl von Diagrammwerten, hier beispielsweise neun, ausgewählt die in einer vorgegebenen Umgebung um den gesuchten normierten Amplitudenwert liegen. Die zugehörigen Winkelindizes kommen als mögliche Winkelindizes des detektierten Radarziels in Frage. Dieses Auswahlverfahren wird für alle empfangenen Amplitudenwerte der in diesem Fall drei Antennenkeulen durchgeführt, so daß man anschließend mehrere, in diesem Fall drei Mengen von möglichen Winkelindizes erhält.

|  | 0.5253 | 56.0000 |  |
|---|---|---|---|
|  | 0.5389 | 75.0000 |  |
|  | 0.5526 | 57.0000 |  |
|  | 0.5560 | 74.0000 | \ |
|  | 0.5733 | 73.0000 | \ |
|  | 0.5772 | 58.0000 | \ |
|  | 0.5898 | 72.0000 | \ |
| 0.6 ---> | 0.5986 | 59.0000 | > mögliche Winkelindizes |
|  | 0.6048 | 71.0000 | / |
|  | 0.6145 | 60.0000 | / |
|  | 0.6169 | 70.0000 | / |
|  | 0.6262 | 69.0000 | / |
|  | 0.6301 | 61.0000 |  |
|  | 0.6340 | 68.0000 |  |
|  | 0.6411 | 62.0000 |  |

Tabelle 2

Zur Entscheidung, in welchem Winkel das detektierte Radarziel nun tatsächlich liegt, werden gemäß 76 alle zuvor als möglich ausgewählte Winkelindizes mit einer Bewertungsfunktion gewichtet, die vorzugsweise dreieckförmig gewählt wird. Figur 6a bis c zeigt die so bewerteten Winkelindizes über einer Achse aller insgesamt zur Auswahl stehenden Winkelindizes und zwar einmal für den linken, für den mittleren und für den rechten Empfangspfad. Die Dreiecke 61 und 62 stehen dabei höher hinaus als beispielsweise das Dreieck 60. Dies resultiert aus einer Überlagerung von Bewertungsfunktionen in den Fällen 61 und 62, da dort sehr eng beieinander liegende Winkelindizes ausgewählt und gewichtet worden sind. Figur 6d zeigt schließlich das Ergebnis einer Auf summierung der drei darüberliegenden Darstellungen, d.h. die Summe der Bewertungsfunktionen aller Empfangspfade zu jeweils einem Winkelindex. Wie man sieht, ergibt sich bei 63 ein Maximum, da sich hier die Bewertungsfunktionen in einem eng begrenzten Winkelbereich überlagern. Dies bedeutet, daß der hier liegende Winkelindex bzw. Winkelindexbereich am häufigsten als möglicher Winkelindex ausgewählt wurde. Das Maximum in der Summe der Bewertungsfunktionen ist somit gemäß 77 das Entscheidungskriterium, daß der zugehörige Winkel als wahrscheinlichster Winkel des Radarziels bestimmt wird. Die Höhe des Maximums bildet dabei gleichzeitig ein Gütekriterium für die getroffene Winkelentscheidung, die um so sicherer ist, je höher der absolute Wert des Maximums liegt.

Alternativ zu der dreieckförmigen Bewertungsfunktion können alle Funktionen verwendet werden, die ein deutliches Maximum herausbilden. Insofern kann als Bewertungsfunktion beispielsweise auch eine gauß- oder eine $cos^2$-förmige Funktion dienen.

Gemäß 78 wird der auf diese Weise bestimmte Winkel als wahrscheinlicher Winkel des Zielobjektes einer weiteren Signalverarbeitung zur Verfügung gestellt.

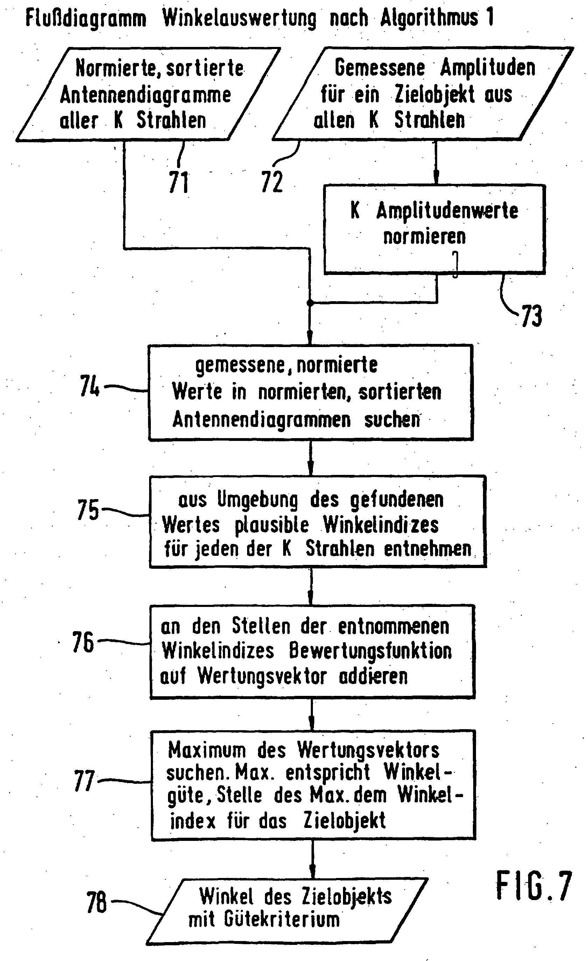

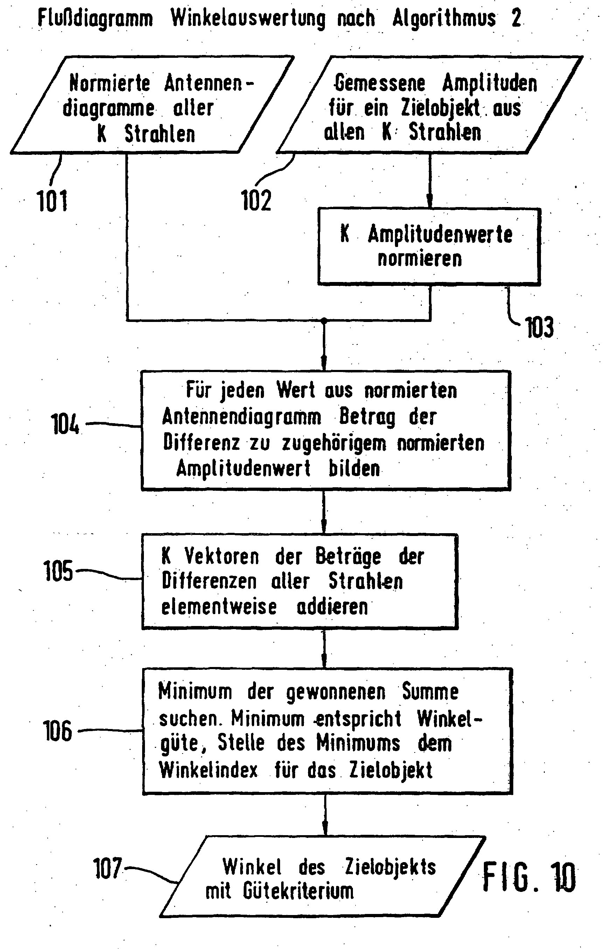

Ein zweites Ausführungsbeispiel der Erfindung basiert auf derselben technischen Vorrichtung, nutzt jedoch einen anderen Algorithmus zur Auswertung der in den zumindest zwei Empfangskanälen aufgenommenen Echoamplituden. Die Blöcke 102 und 103 in Figur 10 sind mit den Blöcken 72 und 73 der Figur 7 identisch, d.h. auch in diesem Ausführungsbeispiel werden die in den einzelnen Empfangskanälen des Radarsystems aufgenommenen Echoamplituden zunächst normiert. Im Unterschied zum ersten Äusführungsbeispiel brauchen die normierten Diagrammwerte des Zweiwege-Antennendiagramms hier jedoch nicht mehr in einer der Größe des Betrages nach sortierten Liste gespeichert zu sein, sondern können so, wie sie gemessen werden, also beispielsweise dem Winkelindex nach, gespeichert sein (101). Gemäß 104 wird nun für jeden Empfangskanal eine Differenzfunktion gebildet, die den Betrag der Differenz zwischen der in diesem Kanal aufgenommenen Echoamplitude und allen Diagrammwerten des Zweiwege-Antennendiagramms dieser Keule beinhaltet. Als Formel ausgedrückt lauten diese Differenzfunktionen:

L(a) = Betrag[nl(a)-El]
M(a) = Betrag[nm(a)-Em]
R(a) = Betrag[nr(a)-Er]

wobei

nl(a), nm(a) und nr(a) die normierten Diagrammwerte der linken, mittleren und rechten Kurve bzw. Keule des Zweiwege-Antennendiagramms aus Figur 3 sind,

El, Em, und Er die normierten Echoamplituden, die im linken, mittleren und rechten Empfangskanal aufgenommen worden sind und

L(a), M(a) und R(a) die oben genannten Differenzfunktionen bezeichnen.

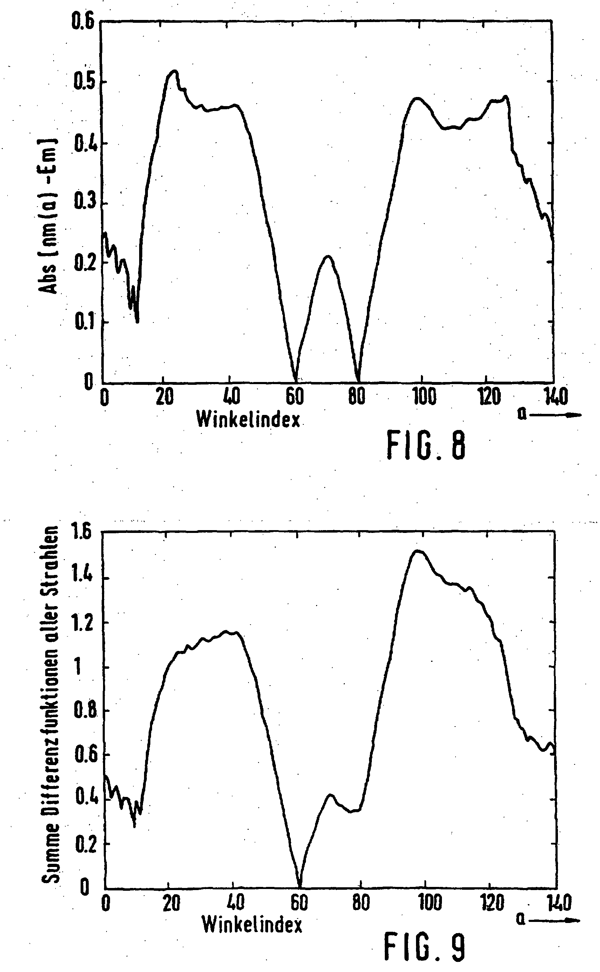

Figur 8 zeigt eine solche Differenzfunktion beispielsweise für den mittleren Empfangskanal und für ein Radarziel in einem Winkel, der dem Winkelindex a = 60 entspricht. Wie man sieht, besitzt die Differenzfunktion an dieser Stelle ein Minimum, das auf den gesuchten Winkel hindeutet. Die Mehrdeutigkeit, die hier durch das zweite Minimum beim Winkelindex a = 80 besteht, wird durch eine anschließende Addition der Differenzfunktionen aller Empfangskanäle gemäß 105 beseitigt.

Figur 9 zeigt eine graphische Darstellung dieser aus der Addition aller Differenzfunktionen erhaltenen neuen Summenfunktion. Durch die Überlagerung verbleibt nur noch ein Minimum bei dem in diesem Beispiel angenommenen Winkelindex a = 60. Verallgemeinernd wird dementsprechend gemäß 106 derjenige Winkelindex als der wahrscheinlichste Winkel des Radarziels bestimmt, bei dem die Summenfunktion aller Differenzfunktionen ihr Minimum besitzt. Die Größe dieses Minimums ist gleichzeitig wiederum ein Gütekriterium für die getroffene Winkelentscheidung. Je deutlicher das Minimum ausgeprägt ist, desto sicherer ist der bestimmte Winkel bzw. Winkelindex der tatsächliche Winkel des detektierten Radarziels. Gemäß 107 wird dieser Winkel wiederum der weiteren Signalverarbeitung des Systems übergeben.

Entsprechend ihrem zuvor dargestellten Grundgedanken kann die Erfindung mit jedem mehrstrahligen Radarsystem realisiert werden, egal wie die Mehrstrahligkeit erreicht wird. Dies kann beispielsweise durch mehrere, getrennte Antennen geschehen, kann jedoch ebenso gut durch eine Antenne mit mehreren Sende- und/oder Empfangselementen erfolgen. Ebenso kann oder können die Antennen alle bekannten strahlformenden Elemente, wie beispielsweise Linsen, Reflektoren, Absorber etc. besitzen. Weiterhin ist das erfindungsgemäße Verfahren und seine Realisierung unabhängig von dem verwendeten Radarverfahren, d.h. es kann sowohl bei gepulsten wie auch bei kontinuierlich abstrahlenden Radarverfahren verwendet werden.

Eingesetzt wird das hier beschriebene Radarsystem insbesondere im Zusammenhang mit einer Fahrgeschwindigkeitsregelung in Kraftfahrzeugen. Es ermöglicht dabei eine Beurteilung, ob sich ein detektiertes Radarziel in der eigenen Fahrspur befindet oder nicht. Unabhängig davon kann das beschriebene Verfahren jedoch auch in allen anderen Anwendungsfällen eingesetzt werden, in denen eine Winkelbestimmung eines Radarziels gewünscht ist. So kann es beispielsweise auch zur Bestimmung des Höhenwinkels eines Flugzieles dienen.

Der meßbare Winkelbereich ist durch die Wahl der Keulenbreite der Antenne(n) bestimmbar. Darüber hinaus ist durch eine Verwendung von gegebenenfalls mehreren, beispielsweise kreisförmig angeordneten Antennen eine Vermessung eines beliebig großen Winkelbereichs bis hin zu 360 Grad möglich.

Nicht zuletzt ist das Verfahren unabhängig von der weiteren Signalverbeitung des Radarsystems, die vorzugsweise mittels einer Fourier Transformation im Frequenzbereich erfolgt. Die zur Bestimmung des Winkels genutzten Amplitudenwerte können jedoch sowohl im Zeit- wie auch im Frequenzbereich gewonnen werden.

Entsprechend der Figur 1 ist das Verfahren besonderes geeignet für eine parallele Verarbeitung der Signale in den zumindest zwei Empfangskanälen. Es ist jedoch ebenso auch eine sequentielle Verarbeitung in einem gemultiplexten Signalverarbeitungsstrang denkbar.

Hinsichtlich des abgespeicherten Antennendiagramms wird das vorgestellte Zweiwege-Antennendiagramm bevorzugt, da dieses am weitesten der Art entspricht, in der das Radar seine Signale aufnimmt. Je nach Auslegung der Strahlcharakteristik und/oder entsprechend ausgewählten Korrekturfunktionen ist jedoch auch eine Verwendung von "normalen", d.h. einfachen Antennendiagrammen möglich.

**Patentansprüche**

1.  Verfahren zur Bestimmung eines Seiten- und/oder eines Höhenwinkels (78, 107) in dem sich ein Radarziel (1) relativ zu einem Bezugssystem befindet, basierend auf einem mehrstrahligen Radarsystem (3-19), bei dem die Echosignale eines jeden Radarziels (1) über wenigstens zwei Strahlen aufgenommen werden, wobei

- die Amplitude eines aufgenommenen Echosignals in jedem Empfangsstrahl normiert wird (73, 103),
- zur Bestimmung des Winkels eines Radarziels (1) für jeden Empfangsstrahl die jeweils normierte Amplitude mit den Diagrammwerten eines für diesen Strahl abgespeicherten, normierten Antennendiagramms (31-33) verglichen wird (74, 104) und
- die Vergleichsergebnisse aus mindestens zwei Empfangsstrahlen miteinander verknüpft werden (72, 102),

**dadurch gekennzeichnet,**

- **daß** der Vergleich dadurch erfolgt, daß aus den abgespeicherten Antennendiagrammen die zur normierten Amplitude des aufgenommenen Echosignals zumindest näherungsweise korrespondierenden winkelproportionalen Werte ausgewählt werden (74, 75) und
- **daß** als Winkel (78, 107) des Radarziels (1) derjenige Winkel bestimmt wird, dessen verknüpfte Vergleichsergebnisse ein Minimum- oder Maximumkriterium erfüllen (77, 106).

2. Verfahren zur Bestimmung eines Seiten- und/oder eines Höhenwinkels (78, 107) in dem sich ein Radarziel (1) relativ zu einem Bezugssystem befindet, basierend auf einem mehrstrahligen Radarsystem (3-19), bei dem die Echosignale eines jeden Radarziels (1) über wenigstens zwei Strahlen aufgenommen werden, wobei

- die Amplitude eines aufgenommenen Echosignals in jedem Empfangsstrahl normiert wird (73, 103),
- zur Bestimmung des Winkels eines Radarziels (1) für jeden Empfangsstrahl die jeweils normierte Amplitude mit den Diagrammwerten eines für diesen Strahl abgespeicherten, normierten Antennendiagramms (31-33) verglichen wird (74, 104) und
- die Vergleichsergebnisse aus mindestens zwei Empfangsstrahlen miteinander verknüpft werden (72, 102),

**dadurch gekennzeichnet,**

- **daß** eine Differenzfunktion gebildet wird (104), die in Abhängigkeit aller möglichen Winkel die Differenz zwischen der in dem jeweiligen Empfangsstrahl aufgenommenen, normierten Amplitude eines Radarechos und allen normierten Diagrammwerten des Antennendiagramms (31-33) dieses Strahls angibt und
- **daß** als Winkel (78, 107) des Radarziels (1) derjenige Winkel bestimmt wird, dessen verknüpfte Vergleichsergebnisse ein Minimum- oder Maximumkriterium erfüllen (77, 106).

3. Verfahren nach Anspruch 1 oder 2,
**dadurch gekennzeichnet,**
**daß** das gespeicherte Antennendiagramm (31-33) ein Zweiwege-Antennendiagramm ist.

4. Verfahren nach einem oder mehreren der Ansprüche 1 bis 3,
**dadurch gekennzeichnet,**
**daß** das gesamte Antennendiagramm (31-33) des mehrstrahligen Radarsystems (3-19) so normiert ist, daß die Summe der Diagrammwerte aller Strahlen zu jeweils einem Winkel den Wert 1 ergibt (31-33).

5. Verfahren nach einem oder mehreren der Ansprüche 1 bis 3,
**dadurch gekennzeichnet,**
**daß** das gesamte Antennendiagramm (31-33) des mehrstrahligen Radarsystems (3-19) so normiert ist, daß das Produkt der Diagrammwerte aller Strahlen zu jeweils einem Winkel den Wert 1 ergibt.

6. Verfahren nach einem der obigen Ansprüche,
**dadurch gekennzeichnet,**
**daß** die Amplituden der Echosignale eines Radarziels (1) aus mindestens zwei Empfangsstrahlen in gleicher Weise normiert werden wie die abgespeicherten Diagrammwerte des Antennendiagramms (31-33).

7. Verfahren nach einem oder mehreren der Ansprüche 1 oder 3 bis 6, **dadurch gekennzeichnet,**

- **daß** die Diagrammwerte von mindestens zwei Strahlen des Antennendiagramms (31-33) des Radarsystems (3-19) in Form von normierten, sortierten Listen von Diagrammwerten abgespeichert sind und
- **daß** als Ergebnis des Vergleich dieser Diagrammwerte mit einer normierten Amplitude eines Echosignals eine Anzahl n von Diagrammwerten ausgewählt wird (75), die innerhalb eines beschränkten Intervalls um den Wert der normierten Amplitude des Echosignals liegen.

**8.** Verfahren nach Anspruch 7,
**dadurch gekennzeichnet,**

- **daß** die zugehörigen Winkelwerte der ausgewählten Diagrammwerte eines Radarstrahls mit Bewertungsfunktionen gewichtet werden (76),
- **daß** die winkelgleichen Werte von zumindest zwei Empfangsstrahlen des Radarsystems (3-19) jeweils zueinander addiert werden und
- **daß** als wahrscheinlicher Winkel des Radarziels (1) derjenige Winkel bestimmt wird, dessen aus allen Empfangsstrahlen aufaddierter, gewichteter Wert maximal oder minimal ist (77).

**9.** Verfahren nach Anspruch 2,
**dadurch gekennzeichnet,**

- **daß** die Beträge von mindestens zwei der auf diese Weise gebildeten Differenzfunktionen (104) addiert werden (105) und
- **daß** als wahrscheinlicher Winkel des Radarziels (1) derjenige Winkel angenommen wird, bei dem die so gebildete Summenfunktion minimal ist (106).

**10.** Vorrichtung zur Bestimmung eines Seiten- und/oder eines Höhenwinkels (78, 107) in dem sich ein Radarziel (1) relativ zu einem Bezugssystem befindet, basierend auf einem mehrstrahligen Radarsystem (3-19), bei dem die Echosignale eines jeden Radarziels (1) über wenigstens zwei Strahlen aufgenommen werden,

- mit Mitteln, um die Amplitude eines aufgenommenen Echosignals in jedem Empfangsstrahl zu normieren (73, 103),
- mit Mitteln, um zur Bestimmung des Winkels eines Radarziels (1) für jeden Empfangsstrahl die jeweils normierte Amplitude mit den Diagrammwerten eines für diesen Strahl abgespeicherten, normierten Antennendiagramms (31-33) zu vergleichen (74, 104) und
- mit Mitteln, um die Vergleichsergebnisse aus mindestens zwei Empfangsstrahlen miteinander zu verknüpfen (72, 102),

**dadurch gekennzeichnet,**

- **daß** Mittel vorhanden sind, mit denen der Vergleich dadurch erfolgt, daß aus den abgespeicherten Antennendiagrammen die zur normierten Amplitude des aufgenommenen Echosignals zumindest näherungsweise korrespondierenden winkelproportionalen Werte ausgewählt werden (74, 75) und
- **daß** Mittel vorhanden sind, die als Winkel (78, 107) des Radarziels (1) denjenigen Winkel bestimmen, dessen verknüpfte Vergleichsergebnisse ein Minimum- oder Maximumkriterium erfüllen (77, 106).

**11.** Vorrichtung zur Bestimmung eines Seiten- und/oder eines Höhenwinkels (78, 107) in dem sich ein Radarziel (1) relativ zu einem Bezugssystem befindet, basierend auf einem mehrstrahligen Radarsystem (3-19), bei dem die Echosignale eines jeden Radarziels (1) über wenigstens zwei Strahlen aufgenommen werden,

- mit Mitteln, um die Amplitude eines aufgenommenen Echosignals in jedem Empfangsstrahl zu normieren (73, 103),
- mit Mitteln, um zur Bestimmung des Winkels eines Radarziels (1) für jeden Empfangsstrahl die jeweils normierte Amplitude mit den Diagrammwerten eines für diesen Strahl abgespeicherten, normierten Antennendiagramms (31-33) zu vergleichen (74, 104) und
- mit Mitteln, um die Vergleichsergebnisse aus mindestens zwei Empfangsstrahlen miteinander zu verknüpfen (72, 102),

**dadurch gekennzeichnet,**

- **daß** Mittel vorhanden sind, mit denen eine Differenzfunktion gebildet wird (104), die in Abhängigkeit aller möglichen Winkel die Differenz zwischen der in dem jeweiligen Empfangsstrahl aufgenommenen, normierten Amplitude eines Radarechos und allen normierten Diagrammwerten des Antennendiagramms (31-33) dieses Strahls angibt und

- **daß** Mittel vorhanden sind, die als Winkel (78, 107) des Radarziels (1) denjenigen Winkel bestimmen, dessen verknüpfte Vergleichsergebnisse ein Minimum- oder Maximumkriterium erfüllen (77, 106).

**Claims**

1. Method for determining an azimuth and/or elevation angle (78, 107) in which a radar target (1) is located relative to a reference system, based on a multibeam radar system (3-19), in which the echo signals from each radar target (1) are received via at least two beams, with

   - the amplitude of a received echo signal being normalized in each reception beam (73, 103),
   - in order to determine the angle of the radar target (1) for each reception beam, the respectively normalized amplitude is compared (74, 104) with the diagram values in a normalized antenna polar diagram (31-33) which is stored for this beam, and
   - the comparison results from at least two reception beams are linked to one another (72, 102),

   **characterized**

   - **in that** the comparison is carried out such that those angle-proportional values which correspond at least approximately to the normalized amplitude of the received echo signal are selected (74, 75) from the stored antenna polar diagrams, and
   - **in that** the angle which is defined as the angle (78, 107) of the radar target (1) is that whose linked comparison results satisfy a minimum or maximum criterion (77, 106).

2. Method for determining an azimuth and/or elevation angle (78, 107) in which a radar target (1) is located relative to a reference system, based on a multibeam radar system (3-19), in which the echo signals from each radar target (1) are received via at least two beams, with

   - the amplitude of a received echo signal being normalized in each reception beam (73, 103),
   - in order to determine the angle of a radar target (1) for each reception beam, the respectively normalized amplitude is compared (74, 104) with the diagram values on a normalized antenna polar diagram (31-33) which is stored for this beam, and
   - the comparison results from at least two reception beams are linked to one another (72, 102),

   **characterized**

   - **in that** a difference function is formed (104) which, as a function of all the possible angles, indicates the difference between the normalized amplitude of a radar echo received in the respective reception beam and all the normalized diagram values in the antenna polar diagram (31-33) for this beam, and
   - **in that** the angle which is defined as the angle (78, 107) of the radar target (1) is that whose linked comparison results satisfy a minimum or maximum criterion (77, 106).

3. Method according to Claim 1 or 2,
   **characterized**
   **in that** the stored antenna polar diagram (31-33) is a two-way antenna polar diagram.

4. Method according to one or more of Claims 1 to 3,
   **characterized**
   **in that** the entire antenna polar diagram (31-33) of the multibeam radar system (3-19) is normalized such that the sum of the diagram values of all the beams in each case produces an angle with the value 1 (31-33).

5. Method according to one or more of Claims 1 to 3,
   **characterized**
   **in that** the entire antenna polar diagram (31-33) of the multibeam radar system (3-19) is normalized such that the product of the diagram values of all the beams in each case produces an angle with the value 1.

6. Method according to one of the above claims,

**characterized**

**in that** the amplitudes of the echo signals of a radar target (1) from at least two reception beams are normalized in the same way as the stored diagram values in the antenna polar diagram (31-33).

**7.** Method according to one or more of Claims 1 or 3 to 6,
   **characterized**

- **in that** the diagram values of at least two beams from the antenna polar diagram (31-33) of the radar system (3-19) are stored in the form of normalized, sorted lists of diagram values, and
- **in that**, as a result of the comparison of these diagram values with a normalized amplitude of an echo signal, a number n of diagram values is selected (75) which lie within a limited interval around the value of the normalized amplitude of the echo signal.

**8.** Method according to Claim 7,
   **characterized**

- **in that** the associated angle values of the selected diagram values for a radar beam are weighted by weighting functions (76),
- **in that** the isoangle values of at least two reception beams of the radar system (3-19) are each added to one another, and
- **in that** the probable angle of the radar target (1) is defined as being that angle whose weighted value added up from all the reception beams is a maximum or minimum (77).

**9.** Method according to Claim 2,
   **characterized**

- **in that** the magnitudes of at least two of the difference functions (104) formed in this way are added (105), and
- **in that** the probable angle of the radar target (1) is assumed to be that angle at which the sum function formed in this way is a minimum (106).

**10.** Apparatus for determining an azimuth and/or elevation angle (78, 107) in which a radar target (1) is located relative to a reference system, based on a multibeam radar system (3-19), in which the echo signals from each radar target (1) are received via at least two beams,

- having means in order to normalize (73, 103) the amplitude of a received echo signal in each reception beam,
- having means, in order to determine the angle of a radar target (1) for each reception beam, for comparing (74, 104) the respectively normalized amplitude with the diagram values in a normalized antenna polar diagram (31-33) stored for this beam, and
- having means in order to link the comparison results from at least two reception beams with one another (72, 102),

**characterized**

- **in that** means are provided using which the comparison is carried out in such a manner that those angle-proportional values which correspond at least approximately to the normalized amplitude of the received echo signal are selected (74, 75) from the stored antenna polar diagrams, and
- **in that** means are provided which define the angle (78, 107) of the radar target (1) as that angle whose linked comparison results satisfy a minimum or maximum criterion (77, 106).

**11.** Apparatus for determining an azimuth and/or elevation angle (78, 107) in which a radar target (1) is located relative to a reference system, based on a multibeam radar system (3-19), in which the echo signals from each radar target (1) are received via at least two beams,

- having means in order to normalize (73, 103) the amplitude of a received echo signal in each reception beam,
- having means, in order to determine the angle of a radar target (1) for each reception beam, for comparing (74, 104) the respectively normalized amplitude with the diagram values in a normalized antenna polar diagram (31-33) stored for this beam, and
- having means in order to link the comparison results from at least two reception beams with one another (72, 102),

**characterized**

- **in that** means are provided using which a difference function is formed (104) which, as a function of all the possible angles, indicates the difference between the normalized amplitude of a radar echo received in the respective reception beam and all the normalized diagram values in the antenna polar diagram (31-33) for this beam, and
- **in that** means are provided which define the angle (78, 107) of the radar target (1) as that angle whose linked comparison results satisfy a minimum or maximum criterion (77, 106).

**Revendications**

1. Procédé pour déterminer un angle d'azimut et/ou un angle d'élévation (78, 107) dans lequel se trouve un objectif radar (1) relativement à un système de référence, en se basant sur un système radar (3-19) à plusieurs faisceaux, les signaux d'échos de l'objectif radar (1) étant reçus par au moins deux faisceaux, et selon lequel

   - l'amplitude d'un signal d'écho reçu est normalisée (73, 103) dans chaque faisceau de réception,
   - pour déterminer l'angle d'un objectif radar (1), pour chaque faisceau de réception, on compare (74, 104) l'amplitude normalisée respective à des valeurs de diagramme d'un diagramme d'antenne normalisé (31-33) mémorisé pour ce faisceau et
   - on combine (72, 102) les résultats de la comparaison d'au moins deux faisceaux de réception,

   **caractérisé en ce que**

   - la comparaison se fait en sélectionnant (74, 75) à partir des diagrammes d'antenne mémorisés, les valeurs proportionnelles à l'angle, qui correspondent au moins approximativement aux amplitudes normalisées du signal d'écho reçu, et
   - comme angle (78, 107) de l'objectif radar (1) on détermine l'angle dont les résultats de comparaison combinés répondent à un critère de minimum ou de maximum (77, 106).

2. Procédé pour déterminer un angle d'azimut et/ou d'élévation (78, 107) dans lequel se trouve un objectif radar (1) relativement à un système de référence, en se basant sur un système radar (3-19) à plusieurs faisceaux, dont les signaux d'échos d'un objectif radar (1) sont reçus par au moins deux faisceaux, et selon lequel

   - l'amplitude d'un signal d'écho reçu est normalisée (73, 103) dans chaque faisceau de réception,
   - pour déterminer l'angle d'un objectif radar (1), pour chaque faisceau de réception, on compare (74, 104) l'amplitude normalisée respective avec les valeurs de diagramme d'un diagramme d'antenne normalisé (31-33) mémorisé pour ce faisceau, et
   - on combine (72, 102) les résultats de la comparaison d'au moins deux faisceaux de réception,

   **caractérisé en ce qu'**

   - on forme une fonction de différence (104) qui indique, selon tous les angles possibles, la différence entre l'amplitude normalisée d'un écho radar reçu dans le faisceau de réception respectif et toutes les valeurs de diagramme normalisées du diagramme d'antenne (31-33) de ce faisceau, et
   - comme angle (78, 107) de l'objectif radar (1) on définit l'angle dont les résultats de comparaison combinés répondent à un critère de minimum ou de maximum (77, 106).

3. Procédé selon l'une quelconque des revendication 1 ou 2,
   **caractérisé en ce que**
   le diagramme d'antenne mémorisé (31-33) est un diagramme d'antenne à deux branches.

4. Procédé selon l'une quelconque des revendications 1 à 3,
   **caractérisé en ce que**
   l'ensemble du diagramme d'antenne (31-33) du système radar à plusieurs faisceaux (3-19) est normalisé pour que la somme des valeurs de diagramme de tous les faisceaux pour chaque angle, soit égale à 1.

**5.** Procédé selon l'une quelconque des revendications 1 à 3,
**caractérisé en ce que**
l'ensemble du diagramme d'antenne (31-33) du système radar à plusieurs faisceaux (3-19) est normalisé pour que le produit des valeurs de diagramme de tous les faisceaux pour chaque angle, soit égal à 1.

**6.** Procédé selon l'une quelconque des revendications précédentes,
**caractérisé en ce que**
les amplitudes des signaux échos d'un objectif radar (1) d'au moins deux faisceaux de réception sont normalisées de la même manière que les valeurs de diagramme mémorisées du diagramme d'antenne (31-33).

**7.** Procédé selon l'une quelconque des revendications 1 ou 3 à 6,
**caractérisé en ce que**

- les valeurs de diagramme d'au moins deux faisceaux du diagramme d'antenne (31-33) du système radar (3-19) sont mémorisées sous la forme de listes de valeurs de diagramme, classées, et normalisées et
- comme résultat de la comparaison de ces valeurs de diagramme avec une amplitude normalisée d'un signal d'écho, on sélectionne (75) un nombre (n) de valeurs de diagramme situées dans un intervalle limité autour de la valeur de l'amplitude normalisée du signal d'écho.

**8.** Procédé selon la revendication 7,
**caractérisé en ce qu'**

- on pondère (76) les valeurs angulaires correspondant aux valeurs de diagramme sélectionnées d'un faisceau radar, avec des fonctions de pondération,
- on additionne les valeurs égales à des angles d'au moins deux faisceaux de réception du système radar (3-19) les unes aux autres, et
- comme angle probable de l'objectif radar (1) on définit l'angle dont la valeur pondérée, résultant de l'addition de tous les faisceaux de réception, correspond à un maximum ou à un minimum (77).

**9.** Procédé selon la revendication 2,
**caractérisé en ce qu'**

- on additionne (105) les valeurs d'au moins deux fonctions de différence (104) formées de cette manière et
- on admet comme angle probable de l'objectif radar (1) l'angle dont la fonction de somme ainsi formée est minimale (106).

**10.** Dispositif pour déterminer un angle d'azimut et/ou un angle d'élévation (78, 107) dans lequel se trouve un objectif radar (1) par rapport à un système de référence, se basant sur un système radar (3-19) à plusieurs faisceaux, selon lequel on reçoit les signaux d'échos d'un objectif radar (1) par au moins deux faisceaux, comprenant :

- des moyens pour normaliser (73, 103) l'amplitude d'un signal d'écho reçu dans chaque faisceau de réception,
- des moyens qui, pour déterminer l'angle d'un objectif radar (1) pour chaque faisceau de réception, comparent (74, 104) l'amplitude normalisée respective à des valeurs de diagramme d'un diagramme d'antenne (31-33) normalisé, mémorisé pour ce faisceau, et
- des moyens pour combiner (72, 102) les résultats de la comparaison d'au moins deux faisceaux de réception,

**caractérisé par**

- des moyens de comparaison qui sélectionnent (74, 25) à partir des diagrammes d'antenne mémorisés, les valeurs proportionnelles à l'angle qui correspondent au moins approximativement à l'amplitude normalisée du signal d'écho reçu, et
- des moyens qui déterminent comme angle (78, 107) de l'objectif radar (1), l'angle dont les résultats de comparaison combinés répondent à un critère de minimum ou de maximum (77, 106).

**11.** Dispositif pour déterminer un angle d'azimut et/ou un angle d'élévation (78, 107) dans lequel se trouve un objectif radar (1) par rapport à un système de référence, se basant sur un système radar (3-19) à plusieurs faisceaux, selon lequel on reçoit les signaux d'échos d'un objectif radar (1) par au moins deux faisceaux, comprenant :

- des moyens pour normaliser (73, 103) l'amplitude d'un signal d'écho reçu dans chaque faisceau de réception,
- des moyens qui, pour déterminer l'angle d'un objectif radar (1) pour chaque faisceau de réception, comparent (74, 104) l'amplitude normalisée respective à des valeurs de diagramme d'un diagramme d'antenne (31-33) normalisé, mémorisé pour ce faisceau, et
- des moyens pour combiner (72, 102) les résultats de la comparaison d'au moins deux faisceaux de réception,

**caractérisé par**

- des moyens avec lesquels on forme (104) une fonction de différence qui, en fonction de tous les angles possibles, donne la différence entre un écho radar d'amplitude normalisée reçu dans le faisceau de réception respectif, et toutes les valeurs de diagramme normalisées du diagramme d'antenne (31-33) de ce faisceau, et
- des moyens qui définissent comme angle (78, 107) de l'objectif radar (1), celui dont les résultats de comparaison combinés répondent à un critère de minimum ou de maximum (77, 106).

FIG. 1

FIG. 2

FIG. 3

FIG. 4

FIG. 5

FIG. 6a

FIG. 6b

FIG. 6c

FIG. 6d

Flußdiagramm Winkelauswertung nach Algorithmus 1

Normierte, sortierte
Antennendiagramme
aller K Strahlen
**71**

Gemessene Amplituden
für ein Zielobjekt aus
allen K Strahlen
**72**

K Amplitudenwerte
normieren
**73**

**74** gemessene, normierte
Werte in normierten, sortierten
Antennendiagrammen suchen

**75** aus Umgebung des gefundenen
Wertes plausible Winkelindizes
für jeden der K Strahlen entnehmen

**76** an den Stellen der entnommenen
Winkelindizes Bewertungsfunktion
auf Wertungsvektor addieren

**77** Maximum des Wertungsvektors
suchen. Max. entspricht Winkelgüte, Stelle des Max. dem Winkelindex für das Zielobjekt

**78** Winkel des Zielobjekts
mit Gütekriterium

**FIG.7**

FIG. 8

FIG. 9

Flußdiagramm Winkelauswertung nach Algorithmus 2

Normierte Antennendiagramme aller
K Strahlen

101

Gemessene Amplituden
für ein Zielobjekt aus
allen K Strahlen

102

K Amplitudenwerte
normieren

103

Für jeden Wert aus normierten
Antennendiagramm Betrag der
Differenz zu zugehörigem normierten
Amplitudenwert bilden

104

K Vektoren der Beträge der
Differenzen aller Strahlen
elementweise addieren

105

Minimum der gewonnenen Summe
suchen. Minimum entspricht Winkelgüte, Stelle des Minimums dem
Winkelindex für das Zielobjekt

106

Winkel des Zielobjekts
mit Gütekriterium

107

FIG. 10